# FASCICULE DE BREVET EUROPEEN

(11) **EP 4 576 672 B1**
(45) Date de publication et mention de la délivrance du brevet: **22.07.2026**
(21) Numéro de dépôt: 24220213.3
(22) Date de dépôt: 16.12.2024
(51) Int. Cl.: H04L 9/40, G10L 17/24, H04L 12/28, G06F 21/31, H04W 12/06

(54) **PROCEDE D'AUTHENTIFICATION D'UN UTILISATEUR POUR L'ACCES A UN SERVICE DE GESTION D'UN DISPOSITIF TERMINAL ET SYSTEME D'AUTORISATION D'ACCES CORRESPONDANT**
VERFAHREN ZUR AUTHENTIFIZIERUNG EINES BENUTZERS FÜR DEN ZUGANG ZU EINEM VERWALTUNGSDIENST EINES ENDGERÄTES UND ZUGANGSBERECHTIGUNGSSYSTEM DAFÜR
METHOD FOR AUTHENTICATING A USER FOR ACCESSING A MANAGEMENT SERVICE OF A TERMINAL DEVICE AND CORRESPONDING ACCESS AUTHORIZATION SYSTEM

(30) Priorité: 21.12.2023 FR 2314872
(43) Date de publication de la demande: 25.06.2025
(73) Titulaire: SAGEMCOM BROADBAND SAS, 92270 Bois-Colombes (FR)
(72) Inventeur: BOUCHON, Cédric, 92270 BOIS-COLOMBES (FR); BELLANGER, Julien, 92270 BOIS-COLOMBES (FR)
(74) Mandataire: Cabinet Le Guen Maillet

(56) Documents cités:
- EP-A1- 3 062 538
- EP-A1- 3 226 585
- WO-A1-2020/112322

## Description

### DOMAINE TECHNIQUE

Le domaine de l'invention est celui des réseaux de télécommunication locaux intégrant une pluralité de dispositifs terminaux, tels qu'un téléviseur (par exemple une télévision connectée de type « *Smart TV* »), un décodeur TV (« *Set Top Box »* en anglais), une passerelle d'accès à un réseau étendu (« *Wide Area Network »* en anglais), etc. En particulier, l'invention concerne un procédé d'authentification d'un utilisateur pour autoriser un accès à un service de gestion gérant un dispositif terminal (e.g., le décodeur TV) et un système d'autorisation d'accès à ce service de gestion.

### ETAT DE LA TECHNIQUE ANTERIEURE

L'accès à des services distants requiert en général l'authentification d'un utilisateur souhaitant y accéder. De tels services distants sont par exemple des services de gestion permettant de gérer à distance différents dispositifs terminaux au sein d'un réseau local (*« Local Area Network »* en anglais). Dans un exemple, un tel service de gestion est un service de maintenance permettant d'effectuer des diagnostics de dysfonctionnements de tels dispositifs terminaux et de proposer des solutions pour remédier à ces dysfonctionnements.

L'authentification de l'utilisateur pour l'accès à de tels services de gestion de dispositifs terminaux peut être effectuée *via* une utilisation de différents types de protocoles d'authentification. Parmi ces protocoles d'authentification, il est connu le protocole du mot de passe (PAP ou *« Password Authentication Protocol »* en anglais). Ce protocole d'authentification requiert l'envoi par un dispositif de l'utilisateur à un système d'authentification, d'un identifiant d'utilisateur et d'un mot de passe associé. En fonction de l'exactitude de cette paire d'informations, le système d'authentification autorise, ou non, l'utilisateur à accéder au service distant souhaité. Toutefois, ce protocole d'authentification reste vulnérable, notamment contre les attaques de type tâtonnement ou par « essais et erreurs » (ou « *trial and error »* en anglais). Afin de renforcer la sécurité de l'authentification de l'utilisateur, d'autres protocoles d'authentification peuvent être utilisés à la place du protocole PAP, ou en combinaison. Ainsi, le protocole d'authentification par défi/réponse (« *Challenge-Response Authentication Protocol »* en anglais) utilise un système de défi-réponse pour authentifier l'utilisateur. Une partie (par exemple le serveur d'authentification) présente une question (i.e., le défi) et une autre partie (par exemple l'utilisateur) doit fournir une réponse valide (i.e., la réponse) pour être authentifiée.

Dans le cadre de l'accès à un service de gestion d'un dispositif terminal (e.g., décodeur TV) dans un réseau local, l'utilisateur peut s'authentifier en interagissant avec des équipements périphériques associés à ces dispositifs terminaux (e.g., télécommande, clavier, etc.). L'utilisateur peut, par exemple, utiliser une télécommande afin d'entrer son identifiant et son mot de passe sur un écran de télévision connecté à un décodeur TV pour l'accès à un service de maintenance du décodeur TV. De la même manière, lorsque le protocole d'authentification est un protocole de type défi/réponse, le défi (e.g., mot, image, etc.) peut être affiché sur un écran de télévision et l'utilisateur peut répondre à ce défi en utilisant la télécommande pour entrer la réponse, qui s'affiche sur l'écran de télévision. Cependant, lorsque ces équipements périphériques sont inexistants ou inopérants, l'utilisateur n'est plus en mesure de s'authentifier et d'accéder au service de gestion demandé.

Il est alors souhaitable de pallier ces inconvénients de l'état de la technique. Il est notamment souhaitable de fournir une solution qui permette d'authentifier l'utilisateur et de l'autoriser à accéder à des services de gestion de dispositifs terminaux sans faire appel aux équipements périphériques (e.g., téléviseur, télécommande, clavier, etc.) associés et sans risquer de compromettre la sécurité du service de gestion.

L'état de la technique est défini par le document WO 2020/112322 A1 qui propose une vérification basée sur la voix pour des défis d'authentification à multiples facteurs.

### EXPOSE DE L'INVENTION

L'invention est définie par les revendications indépendantes. Des variantes de réalisation préférées sont définies par les revendications dépendantes.

Il est proposé ici un procédé de maintenance d'un dispositif terminal connecté à un réseau local, le réseau local étant géré par une passerelle d'accès à un réseau étendu, un dispositif de communication et le dispositif terminal ayant accès à un système d'authentification d'accès et à un système de gestion. Le procédé comportant :
- authentifier l'utilisateur en exécutant une authentification d'un utilisateur pour autoriser un accès à un service de gestion du dispositif terminal, ladite authentification comportant :
- exécuter une phase d'authentification de l'utilisateur comportant :
   (i) recevoir, par le dispositif de communication, en provenance du système d'authentification, un message comprenant un jeton d'authentification,
   (ii) afficher, par le dispositif de communication, le jeton d'authentification,
   (iii) générer, par le dispositif terminal, un enregistrement vocal correspondant à une prononciation par l'utilisateur du jeton d'authentification affiché par le dispositif de communication,
   (iv) authentifier l'utilisateur, par le système d'authentification, lorsqu'un niveau de similitude entre une transcription textuelle du jeton d'authentification issue de l'enregistrement vocal, et ledit jeton d'authentification est supérieur ou égal à un seuil prédéfini,
- et, lorsque l'utilisateur est authentifié, exécuter une phase d'autorisation d'accès au service de gestion comportant : établir, par le système de gestion, un canal de communication sécurisé entre le système de gestion et le dispositif de communication et/ou le dispositif terminal. Le procédé comprenant en outre : effectuer une opération de maintenance sur le dispositif terminal, lorsque l'utilisateur est authentifié et que l'accès au service de gestion est autorisé.

Ainsi, la présente divulgation propose une approche d'authentification d'un utilisateur et d'autorisation d'accès à un service de gestion d'un dispositif terminal (e.g., service de maintenance permettant de diagnostiquer et réparer le dispositif terminal) dans lequel le dispositif de communication joue un rôle d'interface entre l'utilisateur et un système d'authentification. Le dispositif de communication affiche un jeton d'authentification fourni par le système d'authentification et le dispositif terminal enregistre l'utilisateur prononçant à voix haute le jeton d'authentification affiché par le dispositif de communication, et en obtient une transcription textuelle. L'utilisateur est authentifié si cette transcription textuelle et le jeton d'authentification possèdent un niveau de similitude supérieur ou égal au seuil prédéfini.

Ainsi, l'affichage du jeton d'authentification sur le dispositif de communication de l'utilisateur permet de résoudre une authentification de type défi-réponse de manière vocale, sans avoir à faire usage d'un quelconque équipement périphérique du dispositif terminal.

Par ailleurs, la résolution vocale du défi permet à l'utilisateur de consentir verbalement à ce que le système de gestion accède aux données personnelles de l'utilisateur contenues sur le dispositif terminal. En effet, en prononçant le jeton d'authentification à voix haute, l'utilisateur accepte implicitement que le système de gestion se connecte (directement ou indirectement *via* le dispositif de communication) au dispositif terminal, par exemple pour effectuer des opérations de maintenance.

Selon un mode de réalisation, la phase d'authentification de l'utilisateur comporte : recevoir, par le système d'authentification en provenance du système de gestion, une requête de délégation d'authentification de l'utilisateur, de sorte que le système d'authentification transmette au dispositif de communication ledit message comprenant le jeton d'authentification. La requête de délégation comporte au moins une information d'authentification associée à un profil de l'utilisateur.

Déléguer l'authentification de l'utilisateur au système d'authentification est particulièrement avantageux lorsque le dispositif terminal n'a pas d'équipements périphériques fonctionnels pour permettre à l'utilisateur de saisir ses informations d'authentification. Et ainsi, l'utilisateur est authentifié *via* une authentification de type « multifacteur » comprenant d'une part, une authentification auprès du système d'authentification grâce à la délégation d'authentification, et d'autre part, *via* l'obtention de la réponse au défi sous forme vocale. La sécurité de l'authentification de l'utilisateur est donc améliorée.

Selon un mode de réalisation, la phase d'authentification de l'utilisateur comporte : recevoir, par le système de gestion en provenance du dispositif de communication, une requête d'accès au service de gestion comportant une information d'identification du dispositif terminal. Ainsi, le système de gestion est capable de savoir quel dispositif terminal de l'utilisateur est concerné, notamment lorsque l'utilisateur dispose de plusieurs dispositifs terminaux gérés par le système de gestion. En outre, le système de gestion est capable de transmettre la requête de délégation d'authentification de l'utilisateur au système d'authentification approprié.

Selon un mode de réalisation, le dispositif de communication affiche une indication d'activation d'un moyen de captation sonore du dispositif terminal. Ainsi, le dispositif terminal est prêt à enregistrer l'utilisateur lorsqu'il prononce à voix haute le jeton d'authentification affiché par le dispositif de communication.

Selon un mode de réalisation, la phase d'authentification de l'utilisateur comporte en outre :
- obtenir, par le système d'authentification, la transcription textuelle du jeton d'authentification issue de l'enregistrement vocal,
- comparer, ladite transcription textuelle avec le jeton d'authentification transmis par le système d'authentification au dispositif de communication, et
- déterminer le niveau de similitude entre ladite transcription textuelle et ledit jeton d'authentification.

Ainsi, les ressources du système d'authentification sont aussi mutualisées pour réaliser la transcription textuelle du jeton d'authentification.

Selon un mode de réalisation, pour obtenir la transcription textuelle du jeton d'authentification issue de l'enregistrement vocal, le procédé comporte les étapes suivantes exécutées par un système de transcription :
- recevoir, en provenance du dispositif terminal, l'enregistrement vocal correspondant à la prononciation par l'utilisateur du jeton d'authentification affiché par le dispositif de communication, et
- transcrire ledit enregistrement vocal pour obtenir ladite transcription textuelle,
- transmettre au système d'authentification, ladite transcription textuelle.

Ainsi, l'utilisation d'un système dédié à la transcription permet de dédier une quantité de ressources adaptées à transcrire de manière précise des jetons d'authentification qui peuvent être complexes.

Selon un mode de réalisation, pour obtenir la transcription textuelle du jeton d'authentification issue de l'enregistrement vocal, le procédé comporte les étapes suivantes exécutées par le dispositif terminal :
- transcrire l'enregistrement vocal correspondant à la prononciation par l'utilisateur du jeton d'authentification affiché par le dispositif de communication pour obtenir la transcription textuelle du jeton d'authentification issue de l'enregistrement vocal,
- transmettre au système d'authentification, ladite transcription textuelle.

Ainsi, la transcription étant effectuée par le dispositif terminal, il est possible de limiter les intermédiaires et d'améliorer la sécurité de l'authentification de l'utilisateur.

Selon un mode de réalisation, le procédé comporte en outre, préalablement à la phase d'authentification de l'utilisateur :
- authentifier, par le système d'authentification, le dispositif terminal.

Ainsi, le dispositif terminal est considéré d'avance par le système d'authentification comme un dispositif terminal de confiance.

Selon un mode de réalisation, le procédé comporte en outre, préalablement à la phase d'authentification de l'utilisateur :
- authentifier, par le dispositif terminal, le système d'authentification.

Avantageusement, afin d'améliorer la sécurité de l'authentification de l'utilisateur, le système d'authentification et le dispositif terminal s'authentifient mutuellement.

Selon un mode de réalisation, le message comprenant le jeton d'authentification comporte en outre une durée de validité et/ou une date de fin de validité dudit jeton d'authentification prédéfinie. Le dispositif de communication surveille la durée de validité et/ou la date de fin de validité de sorte à requérir un envoi d'un nouveau jeton d'authentification lorsque la durée de validité et/ou la date de fin de validité est expirée.

Avantageusement, il est ainsi possible d'augmenter la sécurité du jeton d'authentification en limitant sa validité dans le temps.

Selon un mode de réalisation, le dispositif terminal a accès au système d'authentification et au système de gestion *via* un accès au réseau étendu par la passerelle.

Il est également proposé ici un système d'autorisation d'accès à un service de gestion, comportant : un dispositif terminal, un dispositif de communication, un système de gestion du dispositif terminal et un système d'authentification. Le dispositif terminal est connecté à un réseau local, le réseau local étant géré par une passerelle d'accès à un réseau étendu. Le dispositif de communication et le dispositif terminal ont accès au système d'authentification et au système de gestion. Le système d'autorisation d'accès au service de gestion comprend de la circuiterie électronique configurée pour :
- exécuter une phase d'authentification de l'utilisateur comportant :
   (i) recevoir, par le dispositif de communication, en provenance du système d'authentification, un message comprenant un jeton d'authentification,
   (ii) afficher, par le dispositif de communication, le jeton d'authentification,
   (iii) générer, par le dispositif terminal, un enregistrement vocal correspondant à une prononciation par l'utilisateur du jeton d'authentification affiché par le dispositif de communication,
   (iv) authentifier l'utilisateur, par le système d'authentification, lorsqu'un niveau de similitude entre une transcription textuelle du jeton d'authentification issue de l'enregistrement vocal, et ledit jeton d'authentification est supérieur ou égal à un seuil prédéfini,
- et, lorsque l'utilisateur est authentifié, exécuter une phase d'autorisation d'accès au service de gestion comportant : établir, par le système de gestion, un canal de communication sécurisé entre le système de gestion et le dispositif de communication et/ou le dispositif terminal, et, lorsque l'utilisateur est authentifié et que l'accès au service de gestion est autorisé, effectuer une opération de maintenance sur le dispositif terminal.

Selon un mode de réalisation, le dispositif terminal est un décodeur de flux audio et vidéo à commande vocale, et le dispositif de communication est un téléphone intelligent ou une tablette électronique ou un ordinateur portable.

Il est également proposé ici, un dispositif terminal destiné à appartenir à un réseau local géré par une passerelle, ledit dispositif terminal comprenant de la circuiterie électronique configurée pour :
- au cours d'une authentification d'un utilisateur pour autoriser un accès à un service de gestion du dispositif terminal :
   (a) générer un enregistrement vocal correspondant à une prononciation par un utilisateur d'un jeton d'authentification pour autoriser un accès à un service de gestion du dispositif terminal;
   (b) transcrire ledit enregistrement vocal pour obtenir une transcription textuelle du jeton d'authentification à l'issue de l'enregistrement vocal ; et
   (c) transmettre à un système d'authentification, ladite transcription textuelle *via* ladite passerelle,
- et, lorsque l'utilisateur est authentifié et que l'accès au service de gestion est autorisé : transmettre des informations de configurations à un système de gestion et recevoir, en réponse, des commandes en provenance dudit système de gestion pour effectuer une opération de maintenance dudit dispositif terminal.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement un exemple d'environnement d'implémentation d'un procédé d'authentification d'un utilisateur selon un mode particulier de réalisation ;
[Fig. 2] illustre sous forme de diagramme les étapes du procédé d'authentification de l'utilisateur selon un mode de réalisation ;
[Fig. 3A] illustre schématiquement des échanges au sein d'un système d'autorisation d'accès à un service de gestion lors de l'exécution du procédé d'authentification de l'utilisateur, selon un premier mode de réalisation ;
[Fig. 3B] illustre schématiquement des échanges au sein d'un système d'autorisation d'accès à un service de gestion lors de l'exécution du procédé d'authentification de l'utilisateur, selon un deuxième mode de réalisation ;
[Fig. 4A] illustre schématiquement un exemple d'architecture matérielle d'un dispositif terminal configuré pour exécuter tout ou partie des étapes du procédé d'authentification des Figs. 2 et 3A ; et
[Fig. 4B] illustre schématiquement un exemple d'architecture matérielle d'un dispositif terminal configuré pour exécuter tout ou partie des étapes du procédé d'authentification des Figs. 2 et 3B.

### EXPOSE DETAILLE DE MODES DE REALISATION

Le principe général de la présente divulgation concerne l'authentification d'un utilisateur pour l'accès à un service de gestion (e.g., service de maintenance) permettant de gérer un dispositif terminal (e.g., un décodeur TV, une passerelle domestique, etc.), même lorsque ce dispositif terminal rencontre des dysfonctionnements au niveau d'interfaces de communication lui permettant de se connecter à des équipements périphériques associés (e.g., écran de télévision, etc.). En effet, dans ce cas, l'utilisateur ne peut s'authentifier auprès du dispositif terminal pour l'accès au service de gestion. En particulier, l'utilisateur ne peut entrer ses informations d'authentification (e.g., identifiant et mot de passe associé), ni répondre à un défi qui serait affiché sur un équipement périphérique, auprès du dispositif terminal pour accéder au service de gestion.

Ainsi, la présente divulgation propose d'utiliser un dispositif de communication tiers (e.g., téléphone intelligent) de l'utilisateur afin de lui permettre de s'authentifier auprès du service de gestion, sans que l'utilisateur n'ait à utiliser les équipements périphériques associés au dispositif terminal.

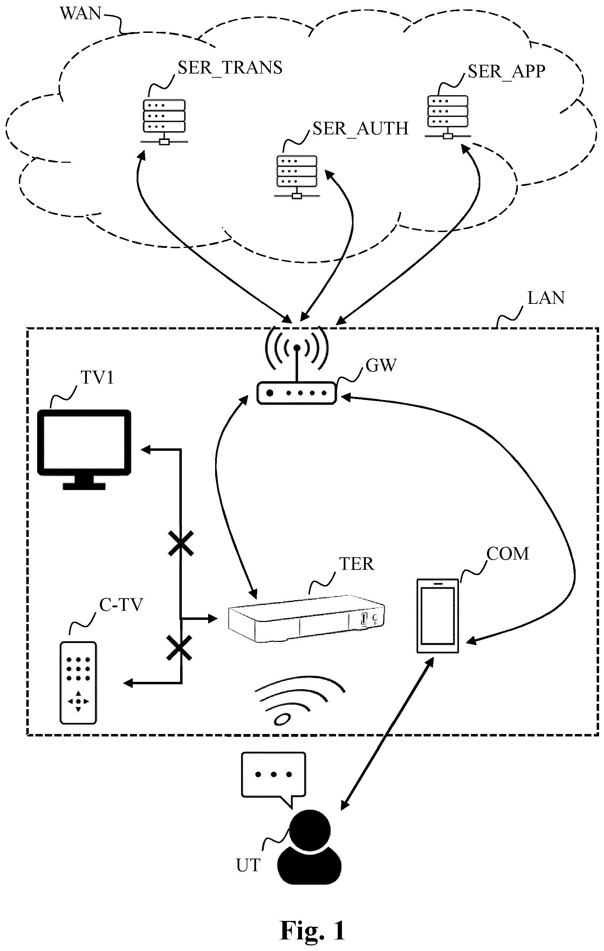

La **Fig. 1** illustre schématiquement un exemple d'environnement d'implémentation d'un procédé d'authentification d'un utilisateur selon un mode particulier de réalisation.

Dans cet exemple de réalisation particulier, une passerelle GW (e.g., une passerelle domestique) est configurée pour être connectée à un réseau étendu WAN (« *Wide Area Network* » en anglais), par exemple l'Internet. La passerelle GW est en outre configurée pour jouer le rôle de routeur pour un dispositif terminal TER et un dispositif de communication COM de l'utilisateur UT, lorsque le dispositif terminal TER et le dispositif de communication COM sont connectés à la passerelle GW. La passerelle GW est configurée pour établir un réseau local LAN (« *Local Area Network* » en anglais) auquel le dispositif terminal TER et le dispositif de communication COM sont aptes à se connecter, par exemple pour communiquer entre eux, ou pour accéder au réseau étendu WAN.

Dans le présent exemple, le dispositif de communication COM de l'utilisateur UT est connecté à la passerelle GW de sorte que la passerelle GW joue le rôle de routeur pour le dispositif de communication COM. Toutefois, le dispositif de communication COM n'est pas nécessairement configuré ou apte à se connecter à la passerelle GW. Ainsi, le dispositif de communication COM pourra être configuré pour accéder au réseau étendu WAN au moyen d'un réseau radio-mobile, par exemple de type 3G, 4G ou 5G ou tout autre infrastructure lui permettant d'accéder au réseau étendu WAN. Dans ce cas, le dispositif de communication COM comprend une interface de communication radio de type 3G, 4G ou 5G.

Le dispositif terminal TER est un dispositif audio/vidéo (A/V) destiné à diffuser des contenus audio et/ou vidéo sur le réseau local LAN. Dans l'exemple de la Fig. 1, le dispositif terminal TER est un décodeur de flux audio-visuel, ou décodeur TV (« *Set-Top Box* » en anglais, aussi connu sous l'acronyme STB), de préférence un décodeur TV à commande vocale (ou « *Voice STB* »). Dans un autre exemple (non représenté sur la Fig. 1), le dispositif terminal TER est une télévision connectée (« *Smart TV* » en anglais) qui est reliée à la passerelle GW, par exemple en WiFi.

Des équipements périphériques peuvent être associés au dispositif terminal TER. Ces équipements périphériques sont, par exemple, connectés au dispositif terminal TER *via* une interface entrée/sortie dédiée. Cette connexion peut être établie par WiFi, liaison HDMI (« *High-Definition Multimedia Interface* » en anglais), Bluetooth, etc. De tels équipements périphériques permettent notamment à l'utilisateur d'interagir avec le dispositif terminal TER. Dans l'exemple de la Fig. 1, une télévision TV1 est connectée au dispositif terminal TER, et adaptée pour afficher les flux A/V décodés. Une télécommande C-TV permet à l'utilisateur UT de piloter à distance le dispositif terminal TER.

Par la suite, de manière illustrative, il est considéré que le service de gestion est un service de maintenance et que le dispositif terminal TER est de type dispositif A/V (e.g., décodeur TV). Ainsi, il est entendu par la suite par « dispositifs terminaux » (y compris « dispositif terminal TER ») des dispositifs A/V appartenant, ou destinés à appartenir (i.e., configurés pour appartenir), au réseau local LAN. Cependant, le procédé d'authentification de l'utilisateur UT selon les modes de réalisation décrits ci-après peut également s'appliquer à la gestion, ou maintenance, d'autres dispositifs tels que des équipements périphériques reliés au dispositif A/V, comme la télévision TV1 (e.g. pour modifier la résolution ou d'autres paramètres d'affichage) ou la passerelle domestique GW (e.g., pour adapter les performances de transmission de manière à optimiser le débit de transmission de la passerelle domestique, par exemple en fonction des services A/V auxquels l'utilisateur UT souhaite accéder).

Comme détaillé ci-après, dans le cadre d'une authentification de l'utilisateur UT *via* un protocole d'authentification par défi/réponse, le dispositif terminal TER est configuré pour capter et générer un enregistrement audio correspondant à la réponse à un défi. En particulier, un défi prononcé par l'utilisateur UT ayant reçu ledit défi sur le dispositif de communication COM.

Le dispositif de communication COM est un dispositif « tiers ». Autrement dit, il est entendu par « dispositif de communication COM » tout dispositif n'étant pas un équipement périphérique associé au dispositif terminal TER. En particulier, le dispositif de communication COM est un dispositif permettant à l'utilisateur UT de s'authentifier auprès du service de gestion qui gère le dispositif terminal TER, sans utiliser les équipements périphériques associés au dispositif terminal TER en question. Autrement dit, le dispositif de communication COM permet à l'utilisateur UT de s'authentifier pour accéder au service de gestion qui gère le dispositif terminal TER lorsque les équipements périphériques du dispositif terminal TER en question sont inexistants ou inopérants (e.g., cas d'un dysfonctionnement des interfaces entrée/sortie du dispositif terminal TER). Dans l'exemple de la Fig. 1, le dispositif de communication COM est un téléphone intelligent (*« smartphone »* en anglais) de l'utilisateur UT. Dans un autre exemple (non représenté dans la Fig. 1), le dispositif de communication COM est une tablette de l'utilisateur UT.

De manière générale, le dispositif de communication COM désigne tout dispositif de communication adapté à se connecter au réseau étendu WAN, avec ou sans l'intermédiaire de la passerelle GW.

Dans l'exemple de la Fig. 1, le dispositif terminal TER (e.g., décodeur TV) rencontre un dysfonctionnement au niveau de ses interfaces de communication avec des équipements périphériques (e.g., interfaces entrée/sortie du décodeur TV), tels que la télévision TV1 et la télécommande C-TV. Ces équipements périphériques sont donc inopérants. Ainsi, lorsque l'utilisateur UT souhaite accéder au service de gestion qui gère le dispositif terminal TER, l'utilisateur UT ne peut s'authentifier auprès du dispositif terminal TER *via* une interaction avec ses équipements périphériques. En particulier, l'utilisateur UT ne peut ni entrer son identifiant et son mot de passe *via* la télécommande C-TV, ni répondre à un défi affiché sur la télévision TV1.

Un tel service de gestion (e.g., service de maintenance) est, par exemple, hébergé sur un système de gestion SER_APP situé dans le réseau étendu WAN et accessible *via* la passerelle GW. Dans un exemple, lorsque le service de gestion est un service de maintenance du dispositif terminal TER, alors le système de gestion SER_APP permet de diagnostiquer des dysfonctionnements du dispositif terminal TER et de les résoudre. Dans cet exemple, le système de gestion SER_APP est un serveur de maintenance d'un fournisseur de services configuré pour assurer la maintenance de tout ou partie des dispositif terminaux du réseau local LAN.

Dans l'exemple de la Fig. 1, un système d'authentification SER_AUTH permet d'authentifier l'utilisateur UT à partir d'informations d'authentification associées à un profil utilisateur dudit utilisateur UT, pour autoriser l'utilisateur UT à accéder à des services (e.g., service de maintenance). Dans un exemple, le système d'authentification SER_AUTH est un serveur d'authentification d'un fournisseur de service situé sur le réseau étendu WAN et accessible *via* la passerelle GW.

Le profil utilisateur de l'utilisateur UT est, par exemple, créé lors de l'enregistrement de l'utilisateur UT auprès du service de gestion du dispositif terminal TER. Ce profil utilisateur comprend des informations telles que : des informations liées à son identité (nom, adresse etc.), des informations concernant les dispositifs terminaux TER de l'utilisateur UT (par exemple : type de dispositifs terminaux, identifiant de chaque dispositif terminal, etc.). Les informations d'authentification sont des informations permettant à l'utilisateur UT de prouver son identité auprès du service de gestion, et, le cas échéant, de relier l'utilisateur UT à son profil utilisateur pour vérifier si l'utilisateur UT est autorisé à bénéficier du service de gestion requis. Dans un exemple, ces informations d'authentification sont un identifiant de l'utilisateur UT associé à un mot de passe.

Dans un mode de réalisation particulier, le dispositif terminal TER peut communiquer *via* la passerelle GW donnant accès au réseau étendu WAN à un système de transcription SER_TRANS, tel qu'un serveur de transcription. Ce système de transcription SER_TRANS permet de transcrire, ou convertir, des mots parlés ou du contenu audio, en texte écrit ou numérique. Ainsi, le système de transcription SER_TRANS est configuré pour transcrire en texte un enregistrement audio, ou vocal, effectué par le dispositif terminal TER.

Dans l'exemple de la Fig. 1, le dispositif terminal TER et le dispositif de communication COM peuvent communiquer avec le système d'authentification SER_AUTH, le système de gestion de service SER_APP et, le cas échéant, le système de transcription SER_TRANS, *via* un accès au réseau étendu WAN par la passerelle GW. En variante, le système d'authentification SER_AUTH, le système de gestion SER_APP, et le cas échéant, le système de transcription SER_TRANS, sont situés dans le réseau local LAN, par exemple dans la passerelle GW ou tout autre équipement capable d'héberger de tels systèmes.

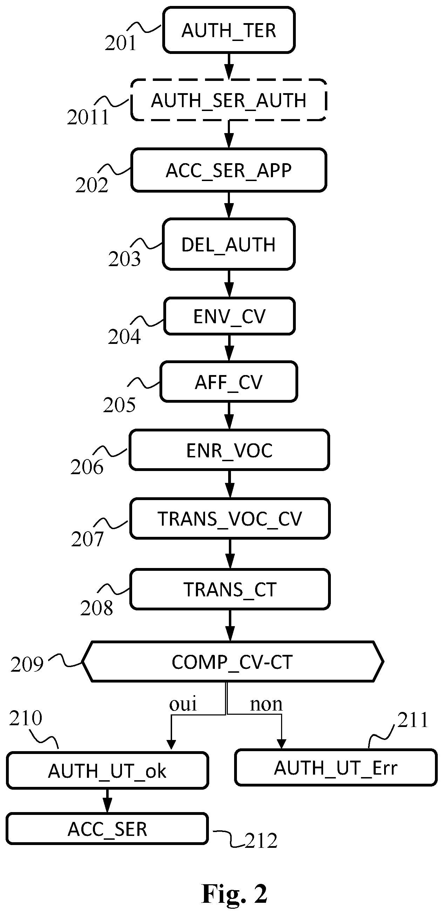

La **Fig. 2** illustre sous forme de diagramme les étapes du procédé d'authentification de l'utilisateur UT selon un mode de réalisation. Le procédé d'authentification de l'utilisateur UT est implémenté dans un système SYS d'autorisation d'accès au service de gestion du terminal TER (e.g., service de maintenance du dispositif terminal TER) (nommé ci-après système d'autorisation SYS).

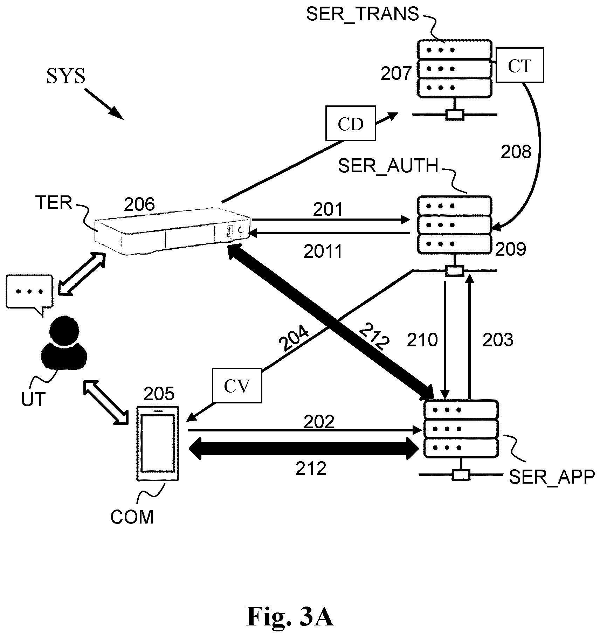

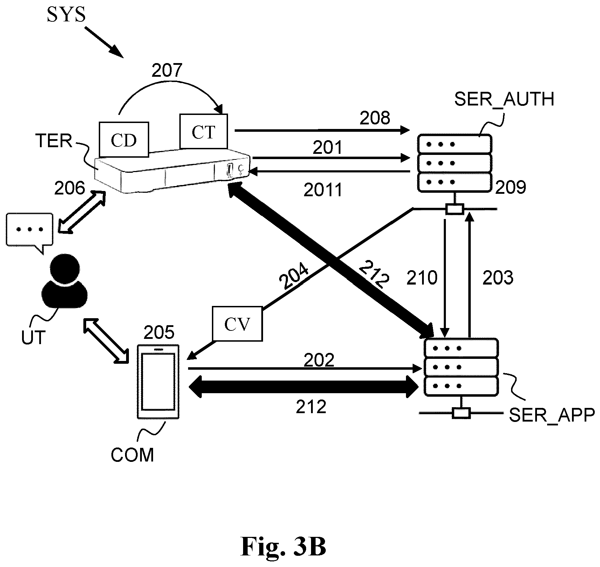

Les Fig. 3A et Fig. 3B présentent des échanges intervenant dans différents modes de réalisation de ce système d'autorisation SYS. Dans la **Fig. 3A****,** le système d'autorisation SYS comporte : le dispositif terminal TER, le dispositif de communication COM, le système de gestion SER_APP, le système d'authentification SER_AUTH et le système de transcription SER_TRANS. Dans la **Fig. 3B****,** le système d'autorisation SYS comporte : le dispositif terminal TER, le dispositif de communication COM, le système de gestion SER_APP, et le système d'authentification SER_AUTH.

Selon un mode de réalisation, au cours d'une étape 201, notée AUTH_TER, le dispositif terminal TER s'authentifie auprès du système d'authentification SER_AUTH (i.e. authentification unidirectionnelle), afin de permettre au dispositif terminal TER d'être reconnu comme un dispositif terminal de confiance.

Afin de s'authentifier auprès du système d'authentification SER_AUTH, le dispositif terminal TER transmet un message comprenant une information permettant à ce dernier d'être reconnu, puis authentifié par le système d'authentification SER_AUTH. Cette information est, par exemple, une clé privée fournie au dispositif terminal TER en usine et lui permettant d'apposer une signature authentifiable grâce à une clé publique. Pour cela, le système d'authentification SER_AUTH possède en mémoire une liste de dispositifs terminaux TER, autorisés à accéder à des services d'un fournisseur de services (e.g., service de maintenance), ainsi que leurs clés publiques associées.

Dans une variante préférée, au cours d'une étape 2011, notée AUTH_SER_AUTH, le système d'authentification SER_AUTH est également authentifié auprès du dispositif terminal TER (i.e., authentification mutuelle). Pour cela, dans un exemple, le système d'authentification SER_AUTH transmet, dans un message, une signature authentifiable (générée grâce à une clé privée) permettant de se faire reconnaître auprès du dispositif terminal TER (grâce à une clé publique associée à la clé privée). Ainsi, le dispositif terminal TER et le système d'authentification SER_AUTH s'authentifient mutuellement l'un auprès de l'autre.

Les clés publiques utiles au dispositif terminal TER et au système d'authentification SER_AUTH peuvent être stockées en mémoire en usine, ou préalablement échangées entre les dispositifs et systèmes concernés.

Lorsque le dispositif terminal TER présente des dysfonctionnements, l'utilisateur UT a la possibilité de requérir l'accès à un service de gestion (e.g., service maintenance) qui gère le dispositif terminal TER et qui est accessible *via* le système de gestion SER_APP. Ainsi, afin de remédier aux dysfonctionnements de son dispositif terminal TER, l'utilisateur UT requiert l'accès au système de gestion SER_APP, pour l'accès au service de gestion. Pour cela, l'utilisateur UT doit s'authentifier auprès du service de gestion. En particulier, comme décrit ci-après, l'utilisateur UT doit s'authentifier *via* un protocole d'authentification de type PAP combiné avec un protocole d'authentification de type défi/réponse.

Pour cela, au cours d'une étape 202, notée ACC_SER_APP, l'utilisateur UT requiert l'accès au système de gestion SER_APP *via* son dispositif de communication COM, par exemple *via* une application dédiée sur son téléphone intelligent. Pour cela, l'utilisateur UT saisit ses informations d'authentification, et le dispositif de communication COM transmet au système de gestion SER_APP une requête d'accès au service de gestion qui inclut les informations d'authentification saisies par l'utilisateur UT (e.g., identifiant et mot de passe qui sont censés correspondre au profil de l'utilisateur UT). Cette requête d'accès au service de gestion peut être sécurisée, par exemple en utilisant un protocole sécurisé tel que le protocole HTTPS (*« Hyper Text Transfer Protocol Secure »* en anglais).

Dans un mode de réalisation, au cours de cette étape 202 ACC_SER_APP, le système de gestion SER_APP exécute le protocole d'authentification de type PAP en authentifiant l'utilisateur UT grâce ses informations d'authentification.

Au cours d'une étape 203, notée DEL_AUTH, sur réception de la requête d'accès au service de gestion, le système de gestion SER_APP transmet au système d'authentification SER_AUTH, une requête de délégation qui délègue l'authentification de l'utilisateur UT au système d'authentification SER_AUTH. En particulier, selon un mode de réalisation, le système de gestion SER_APP délègue l'authentification de l'utilisateur UT pour l'exécution du protocole d'authentification de type défi/réponse.

Dans un autre mode de réalisation, le système de gestion SER_APP délègue l'authentification de l'utilisateur pour l'exécution du protocole d'authentification de type PAP et de type défi/réponse au serveur d'authentification SER_AUTH.

Pour cela, la requête de délégation comprend les informations d'authentification de l'utilisateur UT préalablement transmises depuis le dispositif de communication COM au système de gestion SER_APP, ce qui évite à l'utilisateur UT de devoir refournir ces informations d'authentification auprès du système d'authentification SER_AUTH. Ainsi, le système d'authentification SER_AUTH est spécifiquement utilisé pour vérifier l'identité de l'utilisateur UT lorsque l'utilisateur UT doit prouver son identité au système de gestion SER_APP. Par exemple, cette délégation d'authentification est réalisée conformément au protocole OAuth (« *Open Authentication »* en anglais).

La requête de délégation comprend en outre des informations d'identification permettant d'identifier le dispositif terminal TER pour lequel l'utilisateur UT requiert un accès au service de gestion. Ces informations d'identification sont, par exemple, un numéro de série ou une adresse MAC du dispositif terminal TER. Ces informations d'identification peuvent être :
- soit hébergées sur le système de gestion SER_APP, par exemple, sous la forme d'une liste de dispositifs terminaux chacun associé à ses informations d'identification, cette liste étant également associée avec le profil de l'utilisateur UT,
- soit transmises dans la requête d'accès au service de gestion, conjointement avec les informations d'authentification de l'utilisateur UT. Dans un exemple, les informations d'identification du dispositif terminal TER peuvent être récupérées par l'utilisateur UT au moyen d'un QR-Code à scanner sur le dispositif terminal TER au moyen du dispositif de communication COM.

Dans le cas où les informations d'identification sont hébergées sous forme de liste sur le système de gestion SER_APP en association avec le profil de l'utilisateur UT, l'utilisateur UT peut, par exemple, choisir dans cette liste de dispositifs terminaux (TER), *via* son dispositif de communication (COM), le dispositif terminal (TER) concerné par le dysfonctionnement.

A partir de ces informations d'identification du dispositif terminal TER, le système de gestion SER_APP est en mesure de transmettre la requête de délégation au système d'authentification SER_AUTH approprié parmi un ensemble de systèmes d'authentification (e.g., chaque système d'authentification se charge d'un lot de dispositifs terminaux qui lui est propre).

Au cours d'une étape 204, notée ENV_CV, sur réception de la requête en délégation en provenance du système de gestion SER_APP, le système d'authentification SER_AUTH transmet un message comprenant un jeton d'authentification CV au dispositif de communication COM. La transmission de ce jeton d'authentification CV est réalisée dans le cadre de l'authentification de l'utilisateur UT *via* le protocole d'authentification de type défi/réponse. Ce jeton d'authentification CV transmis est, par exemple, un code de vérification constitué de lettres et/ou de chiffres, notamment de manière à former un ou plusieurs mots, un code à 6 chiffres, etc. Ce code de vérification est adapté à être dicté (i.e., prononcé à voix haute) par l'utilisateur UT.

Selon un mode de réalisation, ce jeton d'authentification CV est valable pendant une durée prédéterminée et/ou jusqu'à une date de fin de validité, au-delà de laquelle il est remplacé par un nouveau jeton d'authentification. Cette durée de validité et/ou cette date de fin de validité sont transmises par le système d'authentification SER_AUTH au dispositif de communication COM, dans le même message que le jeton d'authentification CV. Ainsi, dans un mode de réalisation, le dispositif de communication COM surveille cette durée de validité et/ou cette date de fin de validité afin de déterminer lorsqu'elles sont expirées. Dans le cas où la durée de validité et/ou la date de fin de validité sont expirées, alors le dispositif de communication COM requiert auprès du système d'authentification SER_AUTH un nouveau jeton d'authentification, si le précédent jeton d'authentification CV expire avant d'être validé par le serveur d'authentification SER_AUTH.

Au cours d'une étape 205, notée AFF_CV, sur réception du jeton d'authentification CV, le dispositif de communication COM l'affiche, par exemple sur un écran, pour permettre à l'utilisateur UT de le lire et de le prononcer à voix haute.

Dans le cadre d'une authentification selon le protocole défi/réponse, l'affichage du jeton d'authentification CV (i.e., le défi) par le dispositif de communication COM permet à l'utilisateur UT de résoudre ce défi, sans avoir à faire usage d'un quelconque équipement périphérique du dispositif terminal TER, par exemple la télévision TV1.

Selon un mode de réalisation préféré, le message comportant le jeton d'authentification CV comporte en outre une indication, à afficher à l'utilisateur UT, d'activer des moyens de captation sonore du dispositif terminal TER. Dans un exemple, cette indication demande à l'utilisateur UT d'appuyer sur un bouton physique se trouvant, de préférence, sur une partie frontale du dispositif terminal TER. Cette indication permet d'accompagner au mieux l'utilisateur UT compte tenu que la manière d'activer les moyens de captation sonore du dispositif terminal TER peut être différente d'un dispositif terminal TER à un autre (e.g. indication de l'emplacement du bouton).

Dans une variante, le message ne comporte pas d'indication particulière, c'est directement le dispositif de communication COM (e.g., via une application dédiée) qui affiche cette indication d'activer les moyens de captation sonore sur réception du message comportant le jeton d'authentification CV.

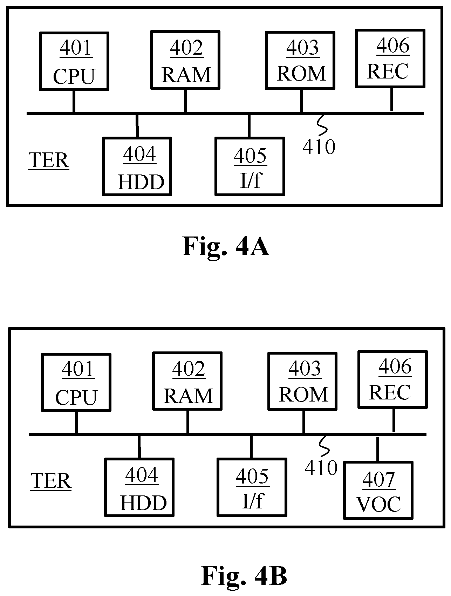

Dans une autre variante présentée en lien avec les Fig. 3B et Fig. 4B, dans le cas où le dispositif terminal TER est équipé d'un module de reconnaissance vocale VOC 407, l'activation des moyens de captation sonore est réalisée sur détection d'une commande vocale de l'utilisateur UT.

Au cours d'une étape 206, notée ENR_ VOC, lorsque les moyens de captation sonore du dispositif terminal TER sont activés (e.g., microphones), alors l'utilisateur UT peut lire à voix haute le jeton de vérification CV affiché par son dispositif de communication COM. La vocalisation du jeton d'authentification CV par l'utilisateur UT est captée par les moyens de captation sonore du dispositif terminal TER de manière à obtenir un enregistrement vocal numérique, c'est-à-dire un jeton d'authentification dicté CD, supposé correspondre au jeton d'authentification CV transmis. Cet enregistrement vocal (i.e., jeton d'authentification dicté CD) est ensuite stocké dans une mémoire du dispositif terminal TER. Ainsi, la résolution du défi se fait *via* la vocalisation du jeton d'authentification CV affiché par le dispositif de communication COM et en utilisant les moyens de captation sonore du dispositif terminal TER (e.g. microphones) pour enregistrer cette vocalisation.

Grâce à l'utilisation du dispositif de communication COM comme substitut aux équipements périphériques associés au dispositif terminal TER, il est possible d'authentifier l'utilisateur UT en effectuant cette authentification « multifacteur » (MFA ou « *Multifactor Authentication* » en anglais) (i.e., utilisation du protocole d'authentification PAP en combinaison avec le protocole d'authentification par défi/réponse). Le défi (i.e., jeton d'authentification CV) peut être affiché, puis résolu vocalement par l'utilisateur UT, même en cas de dysfonctionnement du dispositif terminal TER rendant inutilisable ses propres équipements périphériques.

Selon un mode de réalisation, lorsque le dispositif terminal TER est considéré comme un dispositif de confiance, car préalablement authentifié auprès du système d'authentification SER_AUTH lors de l'étape 201, une authentification « multifacteur » est réalisée pour le dispositif terminal TER grâce à l'enregistrement sonore de la réponse au défi sous forme vocale.

Dans un premier mode de réalisation présenté en lien avec la Fig. 3A, au cours d'une étape 207, notée TRANS_VOC_CV, le dispositif terminal TER transmet, *via* la passerelle GW, à un système de transcription SER_TRANS l'enregistrement vocal correspondant au jeton d'authentification dicté CD.

Sur réception de cet enregistrement vocal, le système de transcription SER_TRANS effectue une transcription textuelle de l'enregistrement vocal. Une transcription textuelle, appelée jeton d'authentification transcrit CT, correspondant au jeton d'authentification dicté CD est ainsi obtenue.

Dans un deuxième mode de réalisation, présenté en lien avec la Fig. 3B, au cours de l'étape 207, notée TRANS_VOC_CV, c'est le dispositif terminal TER qui effectue la transcription de l'enregistrement vocal. Ainsi, dans une variante de l'étape 207 TRANS_VOC_CV, le dispositif terminal TER transcrit, au moyen d'un module de reconnaissance vocale VOC 407 embarqué, l'enregistrement vocal correspondant au jeton d'authentification dicté CD en jeton d'authentification transcrit CT.

Au cours d'une étape 208, notée TRANS_CT, le jeton d'authentification transcrit CT est transmis au système d'authentification SER_AUTH. Selon le premier mode de réalisation présenté en lien avec la Fig. 3A, la transmission du jeton d'authentification transcrit CT est effectuée par le système de transcription SER_TRANS. Selon le deuxième mode de réalisation présenté en lien avec la Fig. 3B, la transmission du jeton d'authentification transcrit CT est effectuée par le dispositif terminal TER, *via* la passerelle GW.

Au cours d'une étape 209, notée COM_CV-CT, le système d'authentification SER_AUTH compare le jeton d'authentification transcrit CT au jeton d'authentification CV préalablement transmis au dispositif de communication COM au cours de l'étape 204 ENV_CV.

Si un niveau de similitude (e.g., exprimé en pourcentage) entre le jeton d'authentification transcrit CT et le jeton d'authentification CV est supérieur ou égal à un seuil prédéfini (e.g., supérieur ou égal à 60%, de préférence supérieur ou égal à 80%), alors le système d'authentification SER_AUTH détermine que le jeton d'authentification transcrit CT correspond (étape 209, résultat « oui ») au jeton d'authentification CV transmis.

Au contraire (étape 209, résultat « non »), si le niveau de similitude entre le jeton d'authentification transcrit CT et le jeton d'authentification CV est inférieur au seuil prédéfini (e.g., inférieur à 60%, de préférence inférieur à 80%), alors le système d'authentification SER_AUTH détermine que le jeton d'authentification transcrit CT ne correspond pas au jeton d'authentification CV transmis. Dans ce cas, au cours d'une étape 211, notée AUTH_UT_Err, le système d'authentification SER_AUTH n'a pas pu authentifier l'utilisateur UT. L'utilisateur UT se voit refuser l'accès au service de gestion du dispositif terminal TER. Autrement dit, l'utilisateur UT n'est pas autorisé à communiquer avec le système de gestion SER_APP et par conséquent ne peut pas bénéficier du service de gestion (e.g., service de maintenance).

Au contraire, lorsque le jeton d'authentification transcrit CT correspond au jeton d'authentification CV transmis, alors au cours d'une étape 210, notée AUTH_UT_ok, le système d'authentification SER_AUTH valide l'authentification de l'utilisateur UT auprès du système de gestion SER_APP. Pour cela, le système d'authentification SER_AUTH envoie un message de validation d'authentification au système de gestion SER_APP, par exemple selon le protocole OAuth.

Au cours d'une étape 212, notée ACC_SER, un canal de communication autorisé et sécurisé (ou « canal de communication sécurisé » ci-après) est mis en place. Il est ainsi possible d'effectuer un procédé de maintenance du dispositif terminal TER. Ce procédé de maintenance comporte donc :
- l'authentification de l'utilisateur UT selon le procédé d'authentification décrit en lien avec les différents modes de réalisation des Figs. 2, 3A, 3B, et
- l'exécution d'une opération de maintenance sur le dispositif terminal TER, lorsque l'utilisateur est authentifié et que l'accès au service de gestion lui est autorisé.

Une telle opération de maintenance comporte, par exemple : un diagnostic du ou des dysfonctionnements du dispositif terminal TER, des opérations de réparation ou résolution des dysfonctionnements identifiés.

Dans un mode de réalisation, lorsque l'utilisateur UT a été valablement authentifié, un canal de communication sécurisé est mis en place entre le système de gestion SER_APP et le dispositif de communication COM, afin de sécuriser les opérations de maintenance subséquentes envers le dispositif terminal TER.

Selon ce mode de réalisation, les opérations de maintenance sont effectuées par l'utilisateur UT qui communique avec le système de gestion SER_APP *via* son dispositif de communication COM. Dans un exemple, le système de gestion SER_APP envoie sur le dispositif de communication COM des instructions à l'utilisateur UT pour diagnostiquer, puis réparer les dysfonctionnements identifiés.

Dans un autre mode de réalisation, alternativement ou additionnellement, un canal de communication sécurisé est aussi mis en place entre le système de gestion SER_APP et le dispositif terminal TER. Ainsi, le système de gestion SER_APP peut communiquer directement, de manière sécurisée, avec le dispositif terminal TER de manière à obtenir des informations de configuration du dispositif terminal TER pour permettre au système de gestion SER_APP d'établir et/ou d'effectuer ces opérations de maintenance. Par exemple, c'est le système de gestion SER_APP qui diagnostique seul ou en collaboration avec l'utilisateur UT les dysfonctionnements, et propose des actions de réparation à effectuer par l'utilisateur UT ou par lui-même.

La résolution vocale du défi a permis à l'utilisateur UT de consentir implicitement à ce que le système de gestion SER_APP se connecte directement au dispositif terminal TER et accède à ses données personnelles pour les faire remonter jusqu'au système de gestion SER_APP, pour faire des diagnostics et des opérations de réparation des dysfonctionnements identifiés.

Dans un exemple, ces informations de configurations et données personnelles sont transmises du dispositif terminal TER au système de gestion SER_APP selon le protocole TR-069 (e.g., protocole « *Technical Report »* ou protocole CWMP pour « *CPE WAN Management Protocol »* en anglais). Ce protocole TR-069 est communément utilisé pour remonter des informations telles que des logs, incidents, du dispositif terminal TER vers les serveurs (e.g. serveurs de clés, serveurs VOD) dédiés au fonctionnement du dispositif terminal TER, et envoyer des commandes de mise à jour (« *update »*), de redémarrage (« *reboot* »), ou de modification des paramètres de configuration du dispositif terminal TER.

Autrement dit, le dispositif terminal TER est configuré pour transmettre au système de gestion SER_APP les informations de configurations du dispositif terminal TER, telles que la version de son micrologiciel (ou *« firmware »* en anglais), les références des équipements périphériques déjà connus du dispositif terminal TER et associés à ce dernier (e.g., le dispositif terminal TER a en mémoire une liste ou une table des équipements périphériques auxquels il est associé et comprenant une référence ou un identifiant de ces équipements périphériques), des données personnelles de l'utilisateur (e.g. référence client et/ou autres données personnelles liées au profil utilisateur de l'utilisateur UT), etc. Ainsi, il est possible pour le système de gestion SER_APP de diagnostiquer un ou des dysfonctionnements du dispositif terminal TER.

En outre, le dispositif terminal TER est configuré pour recevoir du système de gestion SER_APP des commandes telles qu'une commande de mise à jour (« *update* »), de redémarrage (« *reboot* »), de modification des paramètres de configuration du dispositif terminal TER (e.g., commande de modification des paramètres de configuration des interfaces entrée/sortie du dispositif terminal TER), d'appariement ou d'association avec un ou des équipements périphériques, etc., et/ou toutes informations de modifications des paramètres de configuration du dispositif terminal TER permettant de modifier ses paramètres de configuration pour résoudre tous dysfonctionnements préalablement identifiés. Il est ainsi possible de réparer ou résoudre les dysfonctionnements du dispositif terminal TER préalablement identifiés par le système de gestion SER_APP.

Selon un exemple, la télécommande C-TV précédemment associée ou appariée au dispositif terminal TER (par exemple par association (ou « *pairing* » en anglais) selon le protocole de communication ZigBee dans le cas d'une télécommande implémentant le profil RF4CE, ou par association selon le protocole de communication Bluetooth, ou encore selon un autre protocole de communication sans fil) est considérée comme inopérante. La télécommande C-TV est considérée comme inopérante lorsque, par exemple : la télécommande C-TV n'est pas appariée (ou associée) au dispositif terminal TER, la télécommande C-TV est appariée, mais son signal a un niveau trop faible (i.e., inférieure à un seuil prédéterminé de puissance du signal) pour pouvoir être correctement détectée par le dispositif terminal TER, la télécommande C-TV est bien détectée par le dispositif terminal TER mais l'appariement n'est pas effectif en raison d'un problème de reconnaissance de clés de chiffrement, etc.

Ainsi, au cours de l'opération de maintenance, le dispositif terminal TER transmet au système de gestion SER_APP une information d'association représentative d'une association (ou appariement) avec une ou des télécommandes au moment de l'opération de maintenance. Cette information comprend, par exemple :
- une indication que le dispositif terminal TER n'est appairé à aucune télécommande, ou bien une liste des télécommandes auxquelles le dispositif terminal TER est appairé (ou associé) au moment de l'opération de maintenance. Il est à noter que cette liste est potentiellement vide dans le cas où aucune télécommande n'est appairée au dispositif terminal TER, et/ou
- une indication qu'une ou plusieurs télécommandes appairées sont détectées à proximité du dispositif terminal TER, associée à une mesure de la puissance du signal pour chaque télécommande détectée, et/ou,
- une indication qu'une télécommande reconnue par le dispositif terminal TER est détectée, mais qu'il n'arrive pas à communiquer avec parce que la clé de chiffrement est refusée par la télécommande.

En réponse à la réception de cette information d'association, lorsqu'aucune télécommande n'est appairée ou si la télécommande que l'utilisateur UT essaye de faire fonctionner n'est pas dans la liste (ou table) des télécommandes associées (cas d'une nouvelle télécommande), alors le système de gestion SER_APP envoie au dispositif terminal TER une commande de mise en mode d'appairage ou commande d'association, par exemple. Cette commande d'association permet alors de procéder à l'association d'une nouvelle télécommande ou à une nouvelle association avec une télécommande déjà connue (i.e., déjà enregistrée dans la liste des télécommande associées) du dispositif terminal TER. Dans ce dernier cas, dès lors que le dispositif terminal TER exécute cette commande d'association, le contenu de la liste (ou table) d'association (e.g. liste dans laquelle sont référencés des équipements périphériques sans fils avec lesquels le dispositif terminal TER s'est préalablement associé) est supprimé au moins en partie, de sorte que le dispositif terminal TER lance une procédure d'association adaptée à détecter la télécommande et à l'enregistrer dans la liste (ou table).

Dans un autre exemple, lorsqu'une ou plusieurs télécommandes appairées sont détectées à proximité du dispositif terminal TER, mais que le niveau du signal est faible (i.e., inférieure à un seuil prédéterminé de puissance du signal), le système de gestion SER_APP transmet alors à l'utilisateur UT une suggestion de changer les piles de la télécommande C-TV, par exemple *via* l'affichage d'un message sur le dispositif de communication COM.

De même si la télécommande C-TV est détectée mais que le dispositif terminal TER n'arrive pas à communiquer avec, le système de gestion SER_APP peut envoyer une commande d'oublier la télécommande C-TV puis de passer en mode appairage afin de forcer une renégociation des clés de chiffrement.

Selon un autre exemple, afin que le système de gestion SER_APP détecte que la télécommande est inopérante, le dispositif terminal TER envoie vers le système de gestion SER_APP des informations liées aux précédents démarrages du dispositif terminal TER (par exemple un nombre de redémarrages pendant une période de temps donnée, comme les dix dernières minutes ou la dernière heure), ainsi que des informations liées aux derniers appuis de touches de télécommande C-TV reçus par le dispositif terminal TER (par exemple s'il n'y a pas eu d'appui de touche détecté entre les deux ou cinq derniers démarrages).

Selon un autre exemple, dans lequel le rendu sur l'écran de télévision est considéré comme inopérant (e.g., car les paramètres de configuration HDMI employés par le dispositif terminal TER sont incorrects ou non supportés par l'écran), le dispositif terminal TER est configuré pour envoyer au système de gestion SER_APP des informations de configuration vidéo (e.g. résolution) et le modèle du téléviseur associé au dispositif terminal TER. En fonction de ces informations, le système de gestion SER_APP détermine éventuellement une résolution adaptée à l'écran et envoie une commande de changement de résolution au dispositif terminal TER. Sur réception de cette commande, le dispositif terminal TER l'exécute, ce qui a pour effet de modifier la résolution de l'écran, si bien que l'affichage à l'écran soit visible pour l'utilisateur UT. Le système de gestion SER_APP peut également transmettre directement au dispositif terminal TER une configuration par défaut supposée être supportée par tous les modèles d'écrans de télévision, sans nécessiter d'avoir reçu de la part du dispositif terminal TER les informations relatives au modèle du téléviseur.

Selon un autre exemple, sur réception d'informations de configuration du dispositif terminal TER (e.g. adresse d'un serveur courant), le système de gestion SER_APP transmet au dispositif terminal TER une nouvelle adresse d'un nouveau serveur nécessaire au bon démarrage ou au bon fonctionnement du dispositif terminal TER.

La Fig. 4A illustre schématiquement l'architecture matérielle du dispositif terminal TER configuré pour exécuter tout ou partie des étapes du procédé d'authentification selon le premier mode de réalisation illustré en Fig. 3A, et la Fig. 4B illustre schématiquement l'architecture matérielle du dispositif terminal TER configuré pour exécuter tout ou partie des étapes du procédé d'authentification selon le deuxième mode de réalisation illustré en Fig. 3B.

Le dispositif terminal TER selon la Fig. 4A ou 4B comprend, reliés par un bus de communication 410 : un processeur ou CPU (« *Central Processing Unit »* en anglais) 401 ; une mémoire vive RAM (*« Random Access Memory »* en anglais) 402 ; une mémoire morte ROM (*« Read Only Memory »* en anglais) 403, par exemple une mémoire Flash ; un dispositif de stockage de données, tel qu'un disque dur HDD (*« Hard Disk Drive »* en anglais), ou un lecteur de support de stockage, tel qu'un lecteur de cartes SD (*« Secure Digital »* en anglais) 404 ; au moins une interface de communication I/f 405. Cette interface de communication I/f 405 permet au dispositif terminal TER d'interagir avec les autres éléments du système d'autorisation SYS, c'est-à-dire : le dispositif de communication COM, le système d'authentification SER_AUTH et le système de gestion SER_APP, et le cas échéant, au système de transcription SER_TRANS.

Le dispositif terminal TER selon la Fig. 4A ou 4B comprend en outre, reliés par le bus de communication 410 : un module d'enregistrement sonore REC 406, qui comprend des moyens de captation sonore (e.g., microphone) configurés pour capter les sons émis dans l'environnement du dispositif terminal TER (en particulier la voix de l'utilisateur UT) et qui est configuré pour enregistrer les sons captés par les moyens de captation sonore.

Selon le deuxième mode de réalisation présenté en Fig. 4B, le dispositif terminal TER comprend en outre, reliés par le bus de communication 410 : un module de reconnaissance vocale VOC 407 configuré pour transcrire un ou plusieurs mots et /ou chiffres prononcés à voix haute par l'utilisateur UT.

Dans un mode de réalisation, le dispositif terminal TER comprend un bouton physique (non représenté sur les Figs. 4A et 4B) se trouvant de préférence sur une partie frontale du dispositif terminal TER. Le bouton est relié à un interrupteur pour activer les moyens de captation sonore et déclencher l'enregistrement sonore par le module d'enregistrement REC 406. Dans une variante, lorsque le dispositif terminal TER comprend un module de reconnaissance vocale VOC 407 (voir Fig. 4B), l'activation des moyens de captation sonore est réalisée sur détection d'une commande vocale de l'utilisateur UT.

Le processeur 401 est capable d'exécuter des instructions chargées dans la RAM 402 à partir de la ROM 403, d'une mémoire externe (non représentée), du dispositif de stockage de données 404, tel qu'une carte SD, ou d'un réseau de communication (non représenté). Lorsque le dispositif terminal TER est mis sous tension, le processeur 401 est capable de lire de la RAM 402 des instructions et de les exécuter. Ces instructions forment un programme d'ordinateur causant la mise en œuvre, par le processeur 401, d'une partie des comportements, étapes et algorithmes décrits ici, en particulier en combinaison avec une partie des étapes des Figs. 2 et 3A ou 3B. D'une manière générale, le dispositif terminal TER comprend de la circuiterie électronique agencée et configurée pour implémenter les comportements, étapes et algorithmes le concernant décrits ici.

Tout ou partie des comportements, étapes et algorithme décrits ici peut ainsi être implémenté sous forme logicielle par exécution d'un ensemble d'instructions par une machine programmable, telle qu'un DSP (*« Digital Signal Processor »* en anglais) ou un microcontrôleur, ou être implémenté sous forme matérielle par une machine ou un composant (« *chip »* en anglais) dédié ou un ensemble de composants (« *chipset »* en anglais) dédié, tel qu'un FPGA (*« Field-Programmable Gate Array »* en anglais) ou un ASIC (*« Application-Specific Integrated Circuit »* en anglais).

Il est à noter en outre que le terme « module » peut correspondre aussi bien à un composant logiciel qu'à un composant matériel, ou à une combinaison des deux.

Dans un mode de réalisation particulier, le dispositif terminal TER peut embarquer dans ses couches logicielles un module d'intelligence artificielle (non représenté sur les Figs.4A et 4B) destiné à guider l'utilisateur UT dans la résolution des problèmes techniques liés à l'utilisation du dispositif terminal TER et de ses équipements périphériques (e.g., écran de télévision TV1). Cette fonctionnalité peut être implémentée sous forme d'un « chat-bot » en mode expert pouvant interagir directement avec le système de gestion SER_APP, dès lors que le canal de communication sécurisé est établi à l'étape 212 ACC_SER.

## Revendications

1. Procédé de maintenance d'un dispositif terminal (TER) connecté à un réseau local (LAN), le réseau local (LAN) étant géré par une passerelle (GW) d'accès à un réseau étendu (WAN), un dispositif de communication (COM) et le dispositif terminal (TER) ayant accès à un système d'authentification d'accès (SER_AUTH) et à un système de gestion (SER_APP) ledit procédé comportant :
- authentifier l'utilisateur (UT) en exécutant une authentification d'un utilisateur (UT) pour autoriser un accès à un service de gestion du dispositif terminal (TER), ladite authentification comportant :
- exécuter une phase d'authentification de l'utilisateur (UT) comportant :
(i) recevoir (204), par le dispositif de communication (COM), en provenance du système d'authentification (SER_AUTH), un message comprenant un jeton d'authentification (CV),
(ii) afficher (205), par le dispositif de communication (COM), le jeton d'authentification (CV),
(iii) générer (206), par le dispositif terminal (TER), un enregistrement vocal correspondant à une prononciation par l'utilisateur (UT) du jeton d'authentification (CV) affiché par le dispositif de communication (COM), ladite prononciation par l'utilisateur constituant un consentement verbal à ce que le système de gestion accède aux données personnelles de l'utilisateur contenues sur le dispositif terminal (TER) pour effectuer une opération de maintenance,
(iv) authentifier (210) l'utilisateur (UT), par le système d'authentification (SER_AUTH), lorsqu'un niveau de similitude entre une transcription textuelle du jeton d'authentification (CT) issue de l'enregistrement vocal, et ledit jeton d'authentification (CV) est supérieur ou égal à un seuil prédéfini,
- et, lorsque l'utilisateur (UT) est authentifié, exécuter une phase d'autorisation d'accès au service de gestion comportant : établir (212), par le système de gestion (SER_APP), un canal de communication sécurisé entre le système de gestion (SER_APP) et le dispositif de communication (COM) et/ou le dispositif terminal (TER),
ledit procédé comprenant en outre : lorsque l'utilisateur est authentifié et que l'accès au service de gestion est autorisé, transmettre, par le dispositif terminal au système de gestion, des informations de configurations et desdites données personnelles ; recevoir en réponse, par le dispositif terminal (TER), des commandes en provenance dudit système de gestion (SER_APP) pour effectuer ladite opération de maintenance dudit dispositif terminal (TER).

2. Procédé selon la revendication 1, dans lequel la phase d'authentification de l'utilisateur (UT) comporte : recevoir, par le système d'authentification (SER_AUTH) en provenance du système de gestion (SER_APP), une requête de délégation d'authentification de l'utilisateur (UT), de sorte que le système d'authentification (SER_AUTH) transmette au dispositif de communication (COM) ledit message comprenant le jeton d'authentification (CV), ladite requête de délégation comportant au moins une information d'authentification associée à un profil de l'utilisateur (UT).

3. Procédé selon l'une des revendications 1 et 2, dans lequel la phase d'authentification de l'utilisateur (UT) comporte : recevoir, par le système de gestion (SER_APP) en provenance du dispositif de communication (COM), une requête d'accès au service de gestion comportant une information d'identification du dispositif terminal (TER).

4. Procédé selon l'une quelconque des revendications 1 à 3, dans lequel le dispositif de communication (COM) affiche une indication d'activation d'un moyen de captation sonore du dispositif terminal (TER).

5. Procédé selon l'une quelconque des revendications 1 à 4, dans lequel la phase d'authentification de l'utilisateur (UT) comporte en outre :
- obtenir (208), par le système d'authentification (SER_AUTH), la transcription textuelle du jeton d'authentification (CT) issue de l'enregistrement vocal,
- comparer (209), ladite transcription textuelle (CT) avec le jeton d'authentification (CV) transmis par le système d'authentification (SER_AUTH) au dispositif de communication (COM), et
- déterminer le niveau de similitude entre ladite transcription textuelle (CT) et ledit jeton d'authentification (CV).

6. Procédé selon la revendication 5, dans lequel, pour obtenir (207) la transcription textuelle du jeton d'authentification (CT) issue de l'enregistrement vocal, le procédé comporte les étapes suivantes exécutées par un système de transcription (SER_TRANS) :
- recevoir, en provenance du dispositif terminal (TER), l'enregistrement vocal correspondant à la prononciation par l'utilisateur (UT) du jeton d'authentification (CV) affiché par le dispositif de communication (COM), et
- transcrire (207) ledit enregistrement vocal pour obtenir ladite transcription textuelle (CT),
- transmettre (208) au système d'authentification (SER_AUTH), ladite transcription textuelle (CT).

7. Procédé selon la revendication 5, dans lequel, pour obtenir (208) la transcription textuelle du jeton d'authentification (CT) issue de l'enregistrement vocal, le procédé comporte les étapes suivantes exécutées par le dispositif terminal (TER) :
- transcrire (207) l'enregistrement vocal correspondant à la prononciation par l'utilisateur (UT) du jeton d'authentification (CV) affiché par le dispositif de communication (COM) pour obtenir la transcription textuelle (CT) du jeton d'authentification (CT) issue de l'enregistrement vocal, et constituant un consentement verbal à ce que le système de gestion (SER_APP) accède aux données personnelles de l'utilisateur contenues sur le dispositif terminal (TER) pour effectuer l'opération de maintenance,
- transmettre (208) au système d'authentification (SER_AUTH), ladite transcription textuelle (CT).

8. Procédé selon l'une quelconque des revendications 1 à 7, comportant en outre, préalablement à la phase d'authentification de l'utilisateur (UT) :
- authentifier (201), par le système d'authentification (SER_AUTH), le dispositif terminal (TER).

9. Procédé selon la revendication 8, comportant en outre, préalablement à la phase d'authentification de l'utilisateur :
- authentifier (2011), par le dispositif terminal (TER), le système d'authentification (SER_AUTH).

10. Procédé selon l'une quelconque des revendications 1 à 9, dans lequel le message comprenant le jeton d'authentification (CV) comporte en outre une durée de validité et/ou une date de fin de validité dudit jeton d'authentification (CV) prédéfinie, le dispositif de communication (COM) surveillant la durée de validité et/ou la date de fin de validité de sorte à requérir un envoi d'un nouveau jeton d'authentification (CV) lorsque la durée de validité et/ou la date de fin de validité est expirée.

11. Procédé selon l'une quelconque des revendications 1 à 10, dans lequel le dispositif terminal (TER) a accès au système d'authentification (SER_AUTH) et au système de gestion (SER_APP) *via* un accès au réseau étendu (WAN) par la passerelle GW.

12. Système (SYS) d'autorisation d'accès à un service de gestion, comportant : un dispositif terminal (TER), un dispositif de communication (COM), un système de gestion (SER_APP) du dispositif terminal (TER) et un système d'authentification (SER_AUTH), le dispositif terminal (TER) étant connecté à un réseau local (LAN), le réseau local (LAN) étant géré par une passerelle (GW) d'accès à un réseau étendu (WAN), le dispositif de communication (COM) et le dispositif terminal (TER) ayant accès au système d'authentification (SER_AUTH) et au système de gestion (SER_APP), le système (SYS) d'autorisation d'accès au service de gestion comprend de la circuiterie électronique configurée pour :
- exécuter une phase d'authentification de l'utilisateur (UT) comportant :
(i) recevoir (204), par le dispositif de communication (COM), en provenance du système d'authentification (SER_AUTH), un message comprenant un jeton d'authentification (CV),
(ii) afficher (205), par le dispositif de communication (COM), le jeton d'authentification (CV),
(iii) générer (206), par le dispositif terminal (TER), un enregistrement vocal correspondant à une prononciation par l'utilisateur (UT) du jeton d'authentification (CV) affiché par le dispositif de communication (COM), ladite prononciation par l'utilisateur constituant un consentement verbal à ce que le système de gestion accède aux données personnelles de l'utilisateur contenues sur le dispositif terminal (TER) pour effectuer une opération de maintenance,
(iv) authentifier (210) l'utilisateur (UT), par le système d'authentification (SER_AUTH), lorsqu'un niveau de similitude entre une transcription textuelle du jeton d'authentification (CT) issue de l'enregistrement vocal, et ledit jeton d'authentification (CV) est supérieur ou égal à un seuil prédéfini,
- et, lorsque l'utilisateur (UT) est authentifié, exécuter une phase d'autorisation d'accès au service de gestion comportant : établir (212), par le système de gestion (SER_APP), un canal de communication sécurisé entre le système de gestion (SER_APP) et le dispositif de communication (COM) et/ou le dispositif terminal (TER),
et, lorsque l'utilisateur est authentifié et que l'accès au service de gestion est autorisé, transmettre, par le dispositif terminal (TER) au système de gestion (SER_APP), des informations de configurations et desdites données personnelles, recevoir en réponse,, par le dispositif terminal (TER), des commandes en provenance dudit système de gestion (SER_APP) pour effectuer ladite opération de maintenance dudit dispositif terminal (TER).

13. Système (SYS) selon la revendication 12, dans lequel le dispositif terminal (TER) est un décodeur de flux audio et vidéo à commande vocale, et le dispositif de communication (COM) est un téléphone intelligent ou une tablette électronique ou un ordinateur portable.

14. Dispositif terminal (TER) destiné à appartenir à un réseau local (LAN) géré par une passerelle (GW), ledit dispositif terminal (TER) comprenant de la circuiterie électronique configurée pour :
- au cours d'une authentification d'un utilisateur pour autoriser un accès à un service de gestion du dispositif terminal (TER) :
(a) générer (206) un enregistrement vocal correspondant à une prononciation par un utilisateur (UT) d'un jeton d'authentification (CV) pour autoriser un accès à un service de gestion du dispositif terminal (TER), ladite prononciation constituant un consentement verbal à ce que le système de gestion (SER_APP) accède aux données personnelles de l'utilisateur contenues sur le dispositif terminal (TER) pour effectuer une opération de maintenance ;
(b)transcrire (207) ledit enregistrement vocal pour obtenir une transcription textuelle (CT) du jeton d'authentification (CT) à l'issue de l'enregistrement vocal ; et
(c) transmettre (208) à un système d'authentification (SER_AUTH), ladite transcription textuelle (CT) *via* ladite passerelle (GW)
- et, lorsque l'utilisateur est authentifié et que l'accès au service de gestion est autorisé : transmettre des informations de configurations et desdites données personnelles à un système de gestion (SER_APP) et recevoir, en réponse, des commandes en provenance dudit système de gestion (SER_APP) pour effectuer ladite opération de maintenance dudit dispositif terminal (TER).

## Patentansprüche

1. Wartungsverfahren eines Endgeräts (TER), das mit einem lokalen Netzwerk (LAN) verbunden ist, wobei das lokale Netzwerk (LAN) von einem Zugangs-Gateway (GW) zu einem Weitverkehrsnetzwerk (WAN) verwaltet wird, wobei eine Kommunikationsvorrichtung (COM) und das Endgerät (TER) Zugang zu einem Zugangsauthentifizierungssystem (SER_AUTH) und zu einem Verwaltungssystem (SER_APP) aufweisen, wobei das Verfahren Folgendes umfasst:
- Authentifizieren des Benutzers (UT) durch Ausführen einer Authentifizierung eines Benutzers (UT), um einen Zugang zu einem Verwaltungsdienst des Endgeräts (TER) zu genehmigen, wobei die Authentifizierung Folgendes umfasst:
- Ausführen einer Authentifizierungsphase des Benutzers (UT), umfassend:
(i) Empfangen (204), durch die Kommunikationsvorrichtung (COM), von einem Authentifizierungssystem (SER_AUTH) kommend, einer Nachricht, die ein Authentifizierungstoken (CV) umfasst,
(ii) Anzeigen (205) des Authentifizierungstokens (CV) durch die Kommunikationsvorrichtung (COM),
(iii) Erzeugen (206) durch das Endgerät (TER) einer Sprachaufzeichnung, die einem Aussprechen durch den Benutzer (UT) des Authentifizierungstokens (CV), das von der Kommunikationsvorrichtung (COM) angezeigt wird, umfasst, wobei das Aussprechen durch den Benutzer eine verbale Zustimmung dafür bildet, dass das Verwaltungssystem auf personenbezogene Daten des Benutzers, die in dem Endgerät (TER) enthalten sind, zugreift, um einen Wartungsvorgang durchzuführen,
(iv) Authentifizieren (210) des Benutzers (UT) durch das Authentifizierungssystem (SER_AUTH), wenn ein Ähnlichkeitsniveau zwischen einer textuellen Transkription des Authentifizierungstokens (CT), das aus der Sprachaufzeichnung hervorgeht, und dem Authentifizierungstoken (CV) größer oder gleich einer vorbestimmten Schwelle ist,
- und, wenn der Benutzer (UT) authentifiziert ist, Ausführen einer Genehmigungsphase für den Zugang zu dem Verwaltungsdienst, umfassend: Herstellen (212) durch das Verwaltungssystem (SER_APP) eines gesicherten Kommunikationskanals zwischen dem Verwaltungssystem (SER_APP) und der Kommunikationsvorrichtung (COM) und/oder dem Endgerät (TER),
wobei das Verfahren außerdem Folgendes umfasst: wenn der Benutzer authentifiziert ist und der Zugang zu dem Verwaltungsdienst genehmigt ist, Übertragen durch das Endgerät an das Verwaltungssystem der Informationen von Konfigurationen und der personenbezogenen Daten; als Reaktion Empfangen durch das Endgerät (TER) der von dem Verwaltungssystem (SER_APP) kommenden Befehle, um den Wartungsvorgang des Endgeräts (TER) durchzuführen.

2. Verfahren nach Anspruch 1, wobei die Authentifizierungsphase des Benutzers (UT) Folgendes umfasst: Empfangen durch das Authentifizierungssystem (SER_AUTH) von dem Verwaltungssystem (SER_APP) kommend und einer Anforderung zur Delegierung der Authentifizierung des Benutzers (UT) derart, dass das Authentifizierungssystem (SER_AUTH) die Nachricht, die das Authentifizierungstoken (CV) umfasst, an die Kommunikationsvorrichtung (COM) überträgt, wobei die Delegierungsanforderung mindestens eine Authentifizierungsinformation, die einem Profil des Benutzers (UT) zugeordnet ist, umfasst.

3. Verfahren nach Anspruch 1 und 2, wobei die Authentifizierungsphase des Benutzers (UT) Folgendes umfasst: Empfangen durch das Verwaltungssystem (SER_APP), von der Kommunikationsvorrichtung (COM) kommend, einer Anforderung um Zugriff auf den Verwaltungsdienst, die eine Identifikationsinformation des Endgeräts (TER) umfasst.

4. Verfahren nach einem der Ansprüche 1 bis 3, wobei die Kommunikationsvorrichtung (COM) eine Aktivierungsangabe eines Tonaufnahmemittels des Endgeräts (TER) anzeigt.

5. Verfahren nach einem der Ansprüche 1 bis 4, wobei die Authentifizierungsphase des Benutzers (UT) außerdem Folgendes umfasst:
- Erhalten (208) durch das Authentifizierungssystem (SER_AUTH) der textuellen Transkription des Authentifizierungstokens (CT), das aus der Sprachaufzeichnung hervorgeht,
- Vergleichen (209) der textuellen Transkription (CT) mit dem Authentifizierungstoken (CV), das von dem Authentifizierungssystem (SER_AUTH) an die Kommunikationsvorrichtung (COM) übertragen wird, und
- Bestimmen des Ähnlichkeitsniveaus zwischen der textuellen Transkription (CT) und dem Authentifizierungstoken (CV).

6. Verfahren nach Anspruch 5, wobei zum Erhalten (207) der textuellen Transkription des Authentifizierungstokens (CT), das aus der Sprachaufzeichnungen hervorgeht, das Verfahren die folgenden Schritte umfasst, die von einem Transkriptionssystem (SER_TRANS) ausgeführt werden:
- Empfangen, von dem Endgerät (TER) kommend, der Sprachaufzeichnung, die dem Aussprechen durch den Benutzer (UT) des Authentifizierungstokens (CV) entspricht, das von der Kommunikationsvorrichtung (COM) angezeigt wird, und
- Transkribieren (207) der Sprachaufzeichnung, um die textuelle Transkription (CT) zu erhalten,
- Übertragen (208) der textuellen Transkription (CT) an das Authentifizierungssystem (SER_AUTH).

7. Verfahren nach Anspruch 5, wobei zum Erhalten (208) der textuellen Transkription des Authentifizierungstokens (CT), das aus der Sprachaufzeichnung hervorgeht, das Verfahren die folgenden Schritte umfasst, die von dem Endgerät (TER) ausgeführt werden:
- Transkribieren (207) der Sprachaufzeichnung, die dem Aussprechen durch den Benutzer (UT) des Authentifizierungstokens (CV), das von der Kommunikationsvorrichtung (COM) angezeigt wird, entspricht, um die textuelle Transkription (CT) des Authentifizierungstokens (CT) zu erhalten, das aus der Sprachaufzeichnung hervorgeht und eine verbale Zustimmung dafür bildet, dass das Verwaltungssystem (SER_APP) auf die personenbezogenen Daten des Benutzers zugreift, die in dem Endgerät (TER) enthalten sind, um den Wartungsvorgang durchzuführen,
- Übertragen (208) an das Authentifizierungssystem (SER_AUTH) der textuellen Transkription (CT).

8. Verfahren nach einem der Ansprüche 1 bis 7, das außerdem vor der Authentifizierungsphase des Benutzers (UT) Folgendes umfasst:
- Authentifizieren (201) durch das Authentifizierungssystem (SER_AUTH) des Endgeräts (TER).

9. Verfahren nach Anspruch 8, das außerdem vor der Authentifizierungsphase des Benutzers Folgendes umfasst:
- Authentifizieren (2011) durch das Endgerät (TER) des Authentifizierungssystems (SER_AUTH).

10. Verfahren nach einem der Ansprüche 1 bis 9, wobei die Nachricht, die das Authentifizierungstoken (CV) umfasst, außerdem eine Gültigkeitsdauer und/oder ein vordefiniertes Gültigkeitsenddatum des Authentifizierungstokens (CV) umfasst, wobei die Kommunikationsvorrichtung (COM) die Gültigkeitsdauer und/oder das Gültigkeitsenddatum derart überwacht, dass ein Senden eines neuen Authentifizierungstokens (CV) angefordert wird, wenn die Gültigkeitsdauer und/oder das Gültigkeitsenddatum abgelaufen ist.

11. Verfahren nach einem der Ansprüche 1 bis 10, wobei das Endgerät (TER) Zugang zu dem Authentifizierungssystem (SER_AUTH) und dem Verwaltungssystem (SER_APP) über einen Zugang zu dem Weitverkehrsnetzwerk (WAN) durch das Gateway GW besitzt.

12. System (SYS) zur Genehmigung für den Zugang zu einem Verwaltungsdienst, dass Folgendes umfasst: ein Endgerät (TER), eine Kommunikationsvorrichtung (COM), ein Verwaltungssystem (SER_APP) des Endgeräts (TER) und ein Authentifizierungssystem (SER_AUTH), wobei das Endgerät (TER) mit einem lokalen Netzwerk (LAN) verbunden ist, das lokale Netzwerk (LAN) von einem Gateway (GW) zum Zugreifen auf ein Weitverkehrsnetzwerk (WAN) verwaltet ist, die Kommunikationsvorrichtung (COM) und das Endgerät (TER) Zugang zu dem Authentifizierungssystem (SER_AUTH) und zu dem Verwaltungssystem (SER_APP) besitzen, wobei das System (SYS) zur Zugangsgenehmigung zu dem Verwaltungsdienst elektronische Schaltungsanordnungen umfasst, die konfiguriert sind zum:
- Ausführen einer Authentifizierungsphase des Benutzers (UT), umfassend:
(i) Empfangen (204) durch die Kommunikationsvorrichtung (COM) von einem Authentifizierungssystem (SER_AUTH) kommend, einer Nachricht, die ein Authentifizierungstoken (CV) umfasst,
(ii) Anzeigen (205) durch die Kommunikationsvorrichtung (COM) des Authentifizierungstokens (CV),
(iii) Erzeugen (206) durch das Endgerät (TER) einer Sprachaufzeichnung, die einem Aussprechen durch den Benutzer (UT) des Authentifizierungstokens (CV), das von der Kommunikationsvorrichtung (COM) angezeigt wird, umfasst, wobei das Aussprechen durch den Benutzer eine verbale Zustimmung dafür bildet, dass das Verwaltungssystem auf personenbezogene Daten des Benutzers, die in dem Endgerät (TER) enthalten sind, zugreift, um einen Wartungsvorgang durchzuführen,
(iv) Authentifizieren (210) des Benutzers (UT) durch das Authentifizierungssystem (SER_AUTH), wenn ein Ähnlichkeitsniveau zwischen einer textuellen Transkription des Authentifizierungstokens (CT), die aus der Sprachaufzeichnung hervorgeht, und dem Authentifizierungstoken (CV) größer oder gleich einer vorbestimmten Schwelle ist,
- und, wenn der Benutzer (UT) authentifiziert ist, Ausführen einer Genehmigungsphase für den Zugang zu dem Verwaltungsdienst, umfassend: Herstellen (212) durch das Verwaltungssystem (SER_APP) eines gesicherten Kommunikationskanals zwischen dem Verwaltungssystem (SER_APP) und der Kommunikationsvorrichtung (COM) und/oder dem Endgerät (TER),
und, wenn der Benutzer authentifiziert ist und der Zugang zu dem Verwaltungsdienst genehmigt ist, Übertragen durch das Endgerät (TER) an das Verwaltungssystem (SER_APP) der Informationen von Konfigurationen und der personenbezogenen Daten, Empfangen als Reaktion durch das Endgerät (TER) der von dem Verwaltungssystem (SER_APP) kommenden Befehle, um den Wartungsvorgang des Endgeräts (TER) durchzuführen.

13. System (SYS) nach Anspruch 12, wobei das Endgerät (TER) ein Audio- und Video-Flussdecoder mit Sprachsteuerung ist, und die Kommunikationsvorrichtung (COM) ein Smartphone oder ein elektronisches Tablet oder ein Laptop-Computer ist.

14. Endgerät (TER), das dazu bestimmt ist, zu einem lokalen Netzwerk (LAN) zu gehören, das von einem Gateway (GW) verwaltet wird, wobei das Endgerät (TER) die elektronische Schaltungsanordnung umfasst, die konfiguriert ist zum:
- Genehmigen im Laufe einer Authentifizierung des Benutzers eines Zugangs zu einem Verwaltungsdienst des Endgeräts (TER):
(a)Erzeugen (206) einer Sprachaufzeichnung, die einem Aussprechen durch einen Benutzer (UT) eines Authentifizierungstokens (CV) entspricht, um einen Zugang zu einem Verwaltungsdienst des Endgeräts (TER) zu genehmigen, wobei das Aussprechen eine verbale Zustimmung dafür ist, dass das Verwaltungssystem (SER_APP) auf die personenbezogenen Daten des Benutzers, die in dem Endgerät (TER) enthalten sind, zugreift, um eine Wartungsoperation durchzuführen;
(b) Transkribieren (207) der Sprachaufzeichnung, um eine textuelle Transkription (CT) des Authentifizierungstokens (CT) nach der Sprachaufzeichnung zu erhalten; und
(c) Übertragen (208) an ein Authentifizierungssystem (SER_AUTH) der textuellen Transkription (CT) über das Gateway (GW),
- und, wenn der Benutzer authentifiziert ist und der Zugang zu dem Verwaltungsdienst gewährt ist: Übertragen der Informationen von Konfigurationen und der personenbezogenen Daten an ein Verwaltungssystem (SER_APP) und Empfangen als Reaktion von Befehlen von dem Verwaltungssystem (SER_APP) kommend, um den Wartungsvorgang des Endgeräts (TER) durchzuführen.

## Claims

1. Method for maintaining an end device (TER) connected to a local area network (LAN), the local area network (LAN) being managed by a gateway (GW) for access to a wide area network (WAN), a communication device (COM) and the end device (TER) having access to an access authentication system (SER_AUTH) and to a management system (SER_APP), said method comprising:
- authenticating the user (UT) by executing an authentication of a user (UT) for authorising access to a service for managing the end device (TER), said authentication comprising:
- executing a phase of authenticating the user (UT), comprising:
(i) receiving (204), by the communication device (COM), coming from the authentication system (SER_AUTH), a message comprising an authentication token (CV),
(ii) displaying (205), by the communication device (COM), the authentication token (CV),
(iii) generating (206), by the end device (TER), a voice recording corresponding to a pronunciation by the user (UT) of the authentication token (CV) displayed by the communication device (COM), said pronunciation by the user constituting a verbal consent for the management system to access the personal data of the user contained on the end device (TER) in order to perform a maintenance operation,
(iv) authenticating (210) the user (UT), by the authentication system (SER_AUTH), when a level of similarity between a textual transcription of the authentication token (CT) resulting from the voice recording, and said authentication token (CV), is higher than or equal to a predefined threshold,
- and, when the user (UT) is authenticated, executing a phase of authorising access to the management service comprising: establishing (212), by the management system (SER_APP), a secure communication channel between the management system (SER_APP) and the communication device (COM) and/or the end device (TER),
said method furthermore comprising: when the user is authenticated and access to the management service is authorised, transmitting, by the end device to the management system, configuration information and said personal data; receiving in response, by the end device (TER), commands coming from the said management system (SER_APP) to perform said maintenance operation on said end device (TER).

2. Method according to claim 1, wherein the phase of authenticating the user (UT) comprises: receiving, by the authentication system (SER_AUTH) coming from the management system (SER_APP), a request to delegate authentication of the user (UT), so that the authentication system (SER_AUTH) transmits to the communication device (COM) said message comprising the authentication token (CV), said delegation request comprising at least one item of authentication information associated with a profile of the user (UT).

3. Method according to one of claims 1 and 2, wherein the phase of authenticating the user (UT) comprises: receiving, by the management system (SER_APP) coming from the communication device (COM), a request for access to the management service comprising information identifying the end device (TER).

4. Method according to any one of claims 1 to 3, wherein the communication device (COM) displays an indication of activation of a sound capture means of the end device (TER).

5. Method according to any one of claims 1 to 4, wherein the phase of authenticating the user (UT) furthermore comprises:
- obtaining (208), by the authentication system (SER_AUTH), the textual transcription of the authentication token (CT) resulting from the voice recording,
- comparing (209) said textual transcription (CT) with the authentication token (CV) transmitted by the authentication system (SER_AUTH) to the communication device (COM), and
- determining the level of similarity between said textual transcription (CT) and said authentication token (CV).

6. Method according to claim 5, wherein, to obtain (207) the textual transcription of the authentication token (CT) resulting from the voice recording, the method comprises the following steps performed by a transcription system (SER_TRANS):
- receiving, coming from the end device (TER), the voice recording corresponding to the pronunciation by the user (UT) of the authentication token (CV) displayed by the communication device (COM), and
- transcribing (207) said voice recording to obtain said textual transcription (CT),
- transmitting (208) said textual transcription (CT) to the authentication system (SER_AUTH).

7. Method according to claim 5, wherein, to obtain (208) the textual transcription of the authentication token (CT) resulting from the voice recording, the method comprises the following steps performed by the end device (TER):
- transcribing (207) the voice recording corresponding to the pronunciation by the user (UT) of the authentication token (CV) displayed by the communication device (COM) to obtain the textual transcription (CT) of the authentication token (CT) resulting from the voice recording, and constituting a verbal consent for the management system SER_APP to access the personal data of the user contained on the end device (TER) in order to perform a maintenance operation,
- transmitting (208) said textual transcription (CT) to the authentication system (SER_AUTH).

8. Method according to any one of claims 1 to 7, furthermore comprising, prior to the phase of authenticating the user (UT):
- authenticating (201) the end device (TER) by the authentication system (SER_AUTH).

9. Method according to claim 8, furthermore comprising, prior to the phase of authenticating the user:
- authenticating (2011) the authentication system (SER_AUTH) by the end device (TER).

10. Method according to any one of claims 1 to 9, wherein the message comprising the authentication token (CV) furthermore comprises a duration of validity and/or a predefined date of end of validity of said predefined authentication token (CV), the communication device (COM) monitoring the duration of validity and/or the date of end of validity so as to request a sending of a new authentication token (CV) when the duration of validity and/or the date of end of validity is expired.

11. Method according to any one of claims 1 to 10, wherein the end device (TER) has access to the authentication system (SER_AUTH) and to the management system (SER_APP) via access to the wide area network (WAN) by the gateway GW.

12. System (SYS) for authorising access to a management service, comprising: an end device (TER), a communication device (COM), a management system (SER_APP) of the end device (TER) and an authentication system (SER_ AUTH), the end device (TER) being connected to a local area network (LAN), the local area network (LAN) being managed by a gateway (GW) for access to a wide area network (WAN), the communication device (COM) and the end device (TER) having access to the authentication system (SER_AUTH) and to the management system (SER_APP), the system (SYS) for authorising access to the management service comprises electronic circuitry configured to:
- execute a phase of authenticating the user (UT), comprising:
(i) receiving (204), by the communication device (COM), coming from the authentication system (SER_AUTH), a message comprising an authentication token (CV),
(ii) displaying (205), by the communication device (COM), the authentication token (CV),
(iii) generating (206), by the end device (TER), a voice recording corresponding to a pronunciation by the user (UT) of the authentication token (CV) displayed by the communication device (COM), said pronunciation by the user constituting a verbal consent for the management system to access the personal data of the user contained on the end device (TER) in order to perform a maintenance operation,
(iv) authenticating (210) the user (UT), by the authentication system (SER_AUTH), when a level of similarity between a textual transcription of the authentication token (CT) resulting from the voice recording, and said authentication token (CV), is higher than or equal to a predefined threshold,
- and, when the user (UT) is authenticated, executing a phase of authorising access to the management service comprising: establishing (212), by the management system (SER_APP), a secure communication channel between the management system (SER_APP) and the communication device (COM) and/or the end device (TER),
and, when the user is authenticated and access to the management service is authorised, transmitting, by the end device (TER) to the management system (SER_APP), configuration information and said personal data; receiving in response, by the end device (TER), commands coming from the said management system (SER_APP) to perform said maintenance operation on said end device (TER).

13. System (SYS) according to claim 12, wherein the end device (TER) is a voice-controlled audio and video stream decoder, and the communication device (COM) is a smartphone or an electronic tablet or a portable computer.

14. End device (TER) intended to belong to a local area network (LAN) managed by a gateway (GW), said end device (TER) comprising electronic circuitry configured to:
- during an authentication of the user for authorising access to a service for managing the end device (TER):
(a) generate (206) a voice recording corresponding to a pronunciation by a user (UT) of an authentication token (CV) to authorise access to a service for managing the end device (TER);
(b) transcribe (207) said voice recording to obtain a textual transcription (CT) of the authentication token (CT) at the end of the voice recording; and
(c) transmit (208) said textual transcription (CT) to an authentication system (SER_AUTH) via said gateway (GW)
- and, when the user is authenticated and access to the management service is authorised: transmit configuration information to a management system SER_APP and receive in response commands coming from said management system SER_APP to perform a maintenance operation on said end device (TER).
